# EUROPEAN PATENT SPECIFICATION

(11) **EP 1 499 083 B1**
(45) Date of publication and mention of the grant of the patent: **11.01.2012**
(21) Application number: 04016348.7
(22) Date of filing: 12.07.2004
(51) Int. Cl.: H04L 27/26, H04L 1/00, H04L 1/08

(54) **TFI-OFDM transmission/reception systems for UWB communication and methods thereof for mitigating interference from simultaneously operating piconets**
Systeme und Methoden zum Zeit-Frequenz-verschachtelten Senden und Empfangen mittels OFDM für Ultrabreitband Kommunikation, um Störungen von gleichzeitig betriebenen Piconetzen zu vermindern
Systèmes et méthodes de transmission et réception MDFO avec entrelacement temps/fréquence pour communication à bande ultra large avec réduction de l'interférence des piconets fonctionnant simultanément

(30) Priority: 14.07.2003 US 486414 P; 29.03.2004 KR 2004021276
(43) Date of publication of application: 19.01.2005
(73) Proprietor: SAMSUNG ELECTRONICS CO., LTD., Suwon-si, Gyeonggi-do 442-742 (KR); Staccato Communications, Inc., San Diego, CA 92121 (US)
(72) Inventor: Park, Seung-young, Gangnam-gu, Seoul (KR); Kim, Yong-suk, Seo-gu, Daejon (KR); Larsson, Torbjorn, San Diego, CA 92121 (US); Aiello, Roberto, San Diego, CA 92121 (US)
(74) Representative: Grünecker, Kinkeldey, Stockmair & Schwanhäusser

(56) References cited:
- EP-A- 0 966 135
- EP-A- 1 265 402
- EP-A- 1 499 055
- EP-A- 1 507 376
- EP-A- 1 583 268
- US-A- 4 885 743
- US-A1- 2002 085 641
- US-A1- 2002 172 183
- ANUJ BATRA ET AL.: "TI Physical Layer Proposal for IEEE 802.15 Task Group 3a"[Online] 12 May 2003 (2003-05-12), pages 1-75, XP002377175 Retrieved from the Internet: URL:http://grouper.ieee.org/groups/802/15/ pub/2003/May03/03142r2P802-15_TG3a-TI-CFP- Document.doc> [retrieved on 2006-04-13]
- SEUNG YOUNG PARK ET AL: "Interference resilient transmission scheme for multiband ofdm system in uwb channels" CIRCUITS AND SYSTEMS, 2004. ISCAS '04. PROCEEDINGS OF THE 2004 INTERNATIONAL SYMPOSIUM ON VANCOUVER, BC, CANADA 23-26 MAY 2004, PISCATAWAY, NJ, USA,IEEE, US, vol. 5, 23 May 2004 (2004-05-23), pages 373-376, XP010719534 ISBN: 0-7803-8251-X
- VALADAS R T ET AL: "Hybrid (wireless infrared/coaxial) Ethernet local area networks" WIRELESS LAN IMPLEMENTATION, 1992. PROCEEDINGS., IEEE CONFERENCE ON DAYTON, OH, USA 17-18 SEPT. 1992, LOS ALAMITOS, CA, USA,IEEE COMPUT. SOC, US, 17 September 1992 (1992-09-17), pages 21-29, XP010094423 ISBN: 0-8186-2625-9

## Description

This application claims the benefit of U.S. Provisional Application No. 60/486,414, filed on July 14,2003 in the United States Patent and Trademark Office, and Korean Patent Application No. 2004-21276, filed on March 29, 2004 in the Korean Patent Office.

The present invention relates to TFI-OFDM transmission and reception systems and methods thereof for mitigating interference from adjacent piconets in multi-band orthogonal frequency division multiplexing for ultra wide band (UWB) transmissions.

In a wireless communication environment utilizing a wide frequency band, such as the ultra wide band (UWB) 3.1 ∼ 10.6 GHz, the entire frequency band is divided into a single sub-band or a finite number of sub-bands. A continuous wave is not used in a time domain, of which signals exist in every time domain, but rather, a form of a wave packet is used, of which signals exist in a certain region of the time domain. In a single band system that uses a single frequency band, an impulse utilizing every frequency of the UWB is adopted for transmitting and receiving signals. However, the single band system tends to be vulnerable to interference from other systems. To address this shortcoming, a multi-band system utilizes a plurality of sub-bands as the need arises to effectively cope with the interference. However, when using a RF circuit consisting of a single oscillator, the performance of the multi-band system may be seriously degraded since the energy furnished from the multi-path fading channel reaches about 20 % of the entire energy. To overcome this shortcoming, the Texas Instrument (TI) Co. suggested a time frequency interleaved-orthogonal frequency division multiplexing (TFI-OFDM) system for the transmission scheme.

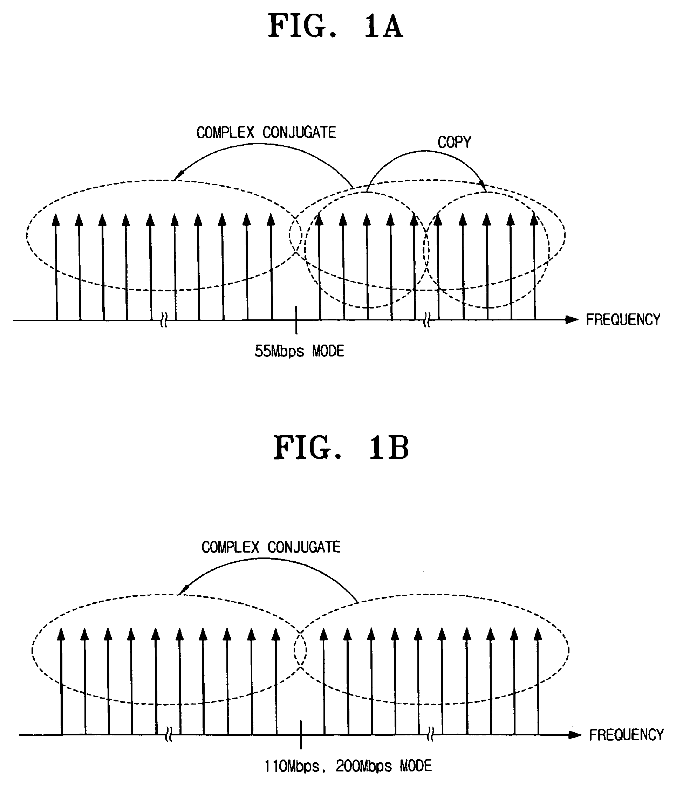

FIGS. 1A and 1B illustrate data spectrums in the frequency domain which are transmitted according to the conventional TFI-OFDM transmission scheme.

FIG. 1A illustrates a 55 Mbps mode ofthe transmission scheme, in which only a half (1/2) of the positive frequency domain carries actual data, and the remaining half (1/2) of the positive domain carries a copy of the actual data. The negative frequency domain carries a complex conjugate of the data in the positive domain. FIG. 1B illustrates 110 Mbps and 200 Mbps modes, in which the positive frequency domain carries the actual data and the negative frequency domain carries the complex conjugate of the actual data.

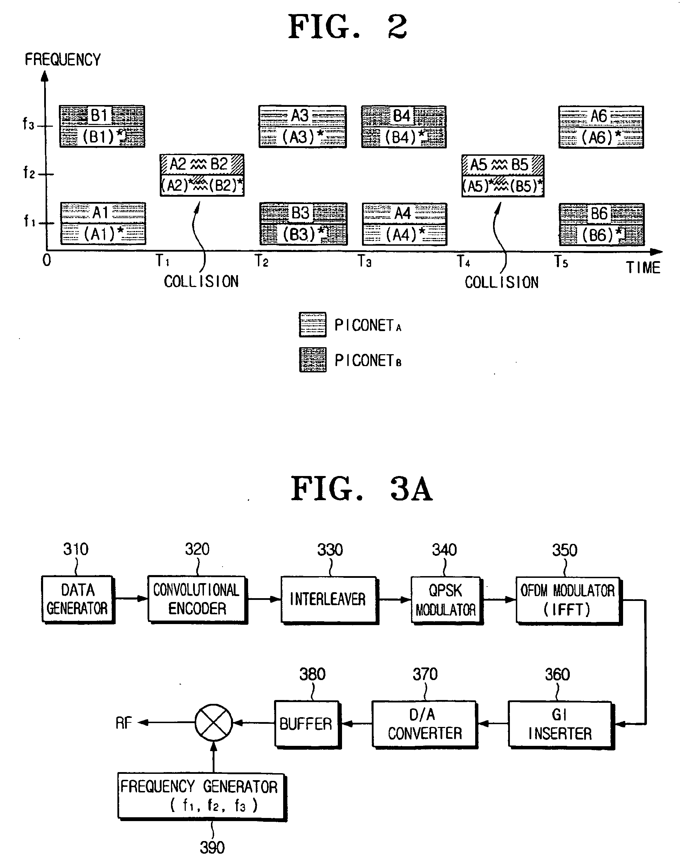

FIG. 2 illustrates a transmission scheme extended in the frequency domain according to the conventional TFI-OFDM transmission system. Shortcomings of the conventional transmission system are described with reference to FIG. 2. Piconet A has a transmission channel {f₁, f₂, f₃, f₁, f₂, f₃,....} and piconet B has a transmission channel {f₃, f₂, f₁, f₃, f₂, f₁,....} by using three frequency bands f₁, f₂, f₃. As shown in FIG. 2, piconets A and B collide with each other. For example, the OFDM symbol A2 of piconet A, which is transmitted in the frequency band f₂, collides with the OFDM symbol B2 of piconet B. The collided OFDM symbols cannot be recovered at a receiving side.

Accordingly, there is a need to mitigate the effect of collisions resulting from adjacent simultaneously operating piconets (SOPs) in the convention TFI-OFDM system.

US 2002/085641 A1 discloses a method and system for interference averaging in a wireless communication system.

It is the object of the present invention to provide an improved Time Frequency Interleaved Orthogonal Frequency Division Multiplexing (TFI-OFDM) transmission method and system.

The object is solved by the subject matter of the independent claims.

Preferred embodiments of the present invention are defined by the dependent claims.

To address the above and other shortcomings, an aspect of the present invention is to provide a TFI-OFDM transmission system and method thereof for loading and transmitting different data in a positive and a negative frequency domain and applying a transmission scheme of time domain extension, and another aspect is to provide a corresponding TFI-OFDM reception system and method thereof.

To achieve the above aspects of the present invention, the TF1-OFDM transmission system includes a data generator generating data having a speed corresponding to a transmission speed mode; a convolutional encoder convolutional-encoding the data; an interleaver bit-interleaving the encoded data; an OFDM modulator inputting a first data group into a positive frequency domain and a second data group into a negative frequency domain, executing an IFFT, and outputting OFDM symbols; a buffer temporarily storing the OFDM symbols in order to sequentially transmit the OFDM symbols in a time domain at least two times; and a frequency generator generating certain frequencies to transmit the OFDM symbols in a certain number of frequency bands corresponding to transmission channels.

Advantageously, the convolutional encoder has a 1/3 coding rate and outputs first, second, and third data groups which are respectively encoded in first, second, and third generators. The interleaver executes a tone-interleaving with respect to each of the first, second, and third data groups.

According to another aspect of the present invention, the TFI-OFDM transmission method includes (a) generating data having a rate corresponding to a transmission speed mode; (b) convolutional-encoding the data; (c) bit-interleaving the encoded data; (d) inputting a first data group into a positive frequency domain and a second data group into a negative frequency domain, executing an invert fast Fourier transform (IFFT), and outputting OFDM symbols; (e) sequentially transmitting the OFDM symbols in different frequency bands at least two times.

Advantageously, step (b) encodes at a 1/3 coding rate and outputs first, second, and third data groups. Step (c) executes a tone-interleaving to each of the first, second, and third data groups.

According to an aspect of the present invention, a TF1-OFDM reception system includes a receiver receiving OFDM symbols transmitted in a certain number of frequency bands corresponding to transmission channels, a collision detector determining collisions of at least two OFDM symbols by measuring the powers with respect to at least two OFDM symbols sequentially received and containing the same data, and a data detector detecting data to be processed based on collision information which is determined with respect to the at least two OFDM symbols by the collision detector.

The collision detector measures a first power and a second power with respect to first OFDM symbols and second OFDM symbols which are the same data sequentially received from a first frequency band and a second frequency band; measures a first average power and a second average power with respect to signals received from the first and second frequency bands; compares the first power and the first average power, compares the second power and the second average power, determines whether there are collisions in the first OFDM symbols and second OFDM symbols, and provides the information to the data detector.

According to yet another aspect of the present invention, a TF1-OFDM reception method includes (a) receiving OFDM symbols transmitted in a certain number of frequency bands corresponding to transmission channels; (b) determining collisions in at least two OFDM symbols by measuring the powers with respect to the at least two OFDM symbols sequentially received and containing the same data; and (c) detecting data to be processed from the at least two OFDM symbols based on the collision determination.

Step (b) includes (b-1) measuring a first power and a second power with respect to a first OFDM symbols and a second OFDM symbols which are the same data sequentially received from a first frequency band and a second frequency band; (b-2) measuring a first average power and a second average power with respect to each signal received from the first frequency band and second frequency band; and (b-3) comparing the first power and the first average power, comparing the second power and the second average power, determining whether there are collisions in the first OFDM symbols and second OFDM symbols, and providing the information to step (c).

### BRIEF DESCRIPTION OF THE DRAWING FIGURES

These and/or other aspects and advantages of the present invention will be readily apparent and appreciated by describing in detail exemplary embodiments and aspects thereof with reference to the accompanying drawings, in which:
FIGS. 1A and 1B are diagrams illustrating a spectrum in a frequency domain of data transmitted in a conventional TFI-OFDM transmission system;
FIG. 2 is a diagram illustrating a transmission scheme extended in the frequency domain of the conventional TFI-OFDM system;
FIG. 3A is a schematic block diagram illustrating a TFI-OFDM transmission system according to an aspect of the present invention;
FIG. 3B is a schematic block diagram illustrating the TFI-OFDM transmission system according an embodiment of the present invention;
FIG. 4 is a conceptual diagram illustrating the transmission scheme according to an aspect of the present invention;
FIG. 5 is a conceptual diagram illustrating inter-symbol collisions in a multi-piconet environment according to an aspect of the present invention;
FIGS. 6A to 6C are diagrams illustrating the transmission scheme according to an aspect of the present invention;
FIGS. 7A to 7D are diagrams illustrating examples of the transmission scheme applied to each of transmission channel patterns;
FIG. 8 is a schematic block diagram illustrating a TFI-OFDM reception system; and
FIG. 9 is a flowchart illustrating exemplary steps for selectively detecting non-collided OFDM symbols in the multi-piconet environment by the TFI-OFDM reception system.

### DETAILED DESCRIPTION OF ILLUSTRATIVE, NON-LIMITING EMBODIMENTS OF THE INVENTION

The present invention will now be described more fully with reference to the accompanying drawings. In the drawings, like reference numbers refer to like elements throughout.

Prior to describing exemplary embodiments of the present invention, it is assumed that a time frequency interleaved-orthogonal frequency division multiplexing (TFI-OFDM) system utilizes a 1/3 convolutional encoder, an applicable transmission speed mode is limited to 110 Mbps and 200 Mbps, and a transmission band has three frequency bands f₁, f₂, f₃. It should be appreciated that the 1/3 convolutional encoder is exemplary for purposes of explanation and not limitation, as well as the transmission speed.

FIG. 3A is a schematic block diagram illustrating the TFI-OFDM transmission system according to an aspect of the present invention. As shown in FIG. 3A, the transmission system includes a data generator 310, a convolutional encoder 320, an interleaver 330, a quadrature phase shifting keying (QPSK) modulator 340, an orthogonal frequency division multiplexing (OFDM) modulator 350, a guard interval (GI) inserter 360, a digital-to-analog (D/A) converter 370, a buffer 380, and a frequency generator 390.

The data generator 310 generates binary data having a ratio corresponding to transmission speed modes, for example, 110 Mbps and 200 Mbps, which is defined in the system.

The convolutional encoder 320 convolutional-encodes an input data at a certain coding rate. For example, a 200-bit input data is output as 600-bit coded data at a 1/3 coding rate.

The interleaver 330 performs symbol interleaving and tone interleaving to the coded data.

The QPSK modulator 340 QPSK-modulates the input data. For instance, if 200-bit data is input, the QPSK modulator 340 outputs 100 symbol data by mapping 2 bits into each symbol.

The OFDM modulator 350 modulates data of a frequency domain into OFDM symbols of a time domain using an invert fast Fourier transform (1FFT). According to an embodiment of the present invention, the OFDM modulator 350 outputs OFDM symbols in the form of a complex conjugate by inputting different data into the positive and negative frequency domains, respectively, and executing the IFFT. Hence, double the amount of data are transmitted as compared with the OFDM symbols of the time domain in the conventional TFI-OFDM transmission system.

The GI inserter 360 copies a certain interval of a rear part of the IFFT-executed OFDM symbols and inserts the certain interval into a front part of the OFDM symbol so as to maintain orthogonality of the OFDM symbols in multi-path channel conditions. The certain interval inserted into the front of the OFDM symbol is referred to as a guard interval (GI).

The D/A converter 370 converts a digital signal into an analog signal.

The buffer 380 temporarily stores the transmitted OFDM symbols and transmits the same OFDM symbols in the time domain sequentially more than two times, to thus extend the OFDM symbols into the time domain.

The frequency generator 390 generates frequencies corresponding to three frequency bands in accordance with a pre-set transmission channel pattern. Thus, the OFDM symbols, which are converted to the final analog signals, are up-converted sequentially into predetermined frequency bands.

Accordingly, in the TFI-OFDM transmission system according to an aspect of the present invention, the OFDM symbols transmit double the data amount as compared with the conventional OFDM symbols, and the data are sequentially transmitted two times in the different frequency bands depending on the transmission channel.

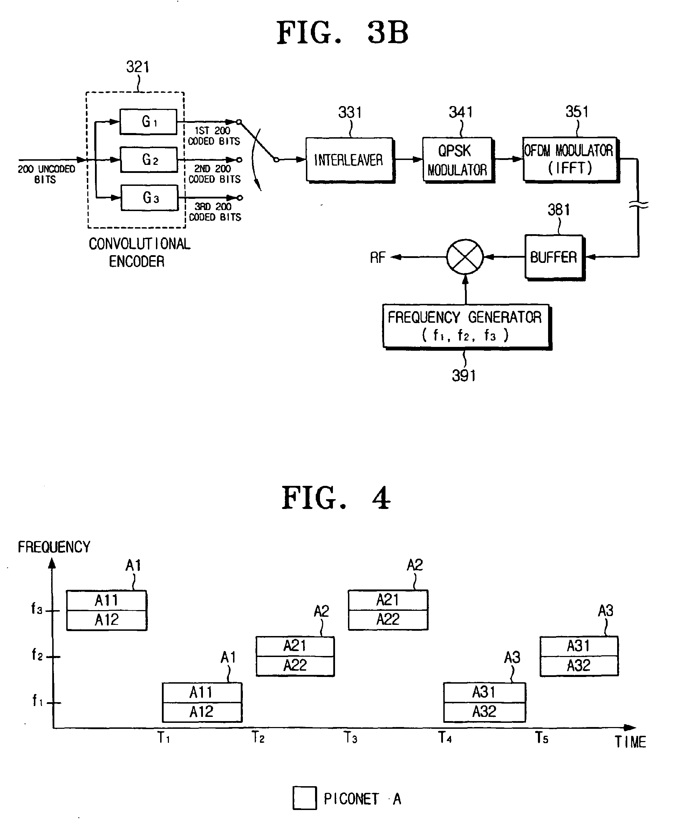

FIG. 3B is a schematic block diagram illustrating the TFI-OFDM transmission system according an embodiment of the present invention. Detailed descriptions of like elements in the FIG. 3A are omitted for conciseness.

The transmission system includes a convolutional encoder 321, an interleaver 331, a QPSK modulator 341, an OFDM modulator 351, a buffer 381, and a frequency generator 391.

The convolutional encoder 321 has a 1/3 coding rate and, accordingly, includes three generator polynomials (hereinafter refer to as first, second, and third generators). The first, second, and third generators G1, G2 and G3 each output the encoded data. If 200-bit data is input, the first, second, and third generators G1, G2, and G3 each outputs 200-bit coded first, second, and third data groups, respectively.

The interleaver 331 omits the symbol interleaving and performs the tone interleaving alone with respect to the first, second, and third data groups respectively output from the first, second, and third generators G1, G2, and G3 of the convolutional encoder 320.

The QPSK modulator 341 performs the QPSK modulation to the tone-interleaved first, second, and third data groups.

The OFDM modulator 351 modulates data of the frequency domain into OFDM symbols of the time domain through the IFFT. According to an aspect of the present invention, the OFDM modulator 351 inputs different data into the positive and the negative frequency domains, respectively, and executes the IFFT to the input data. The positive frequency domain is input with the first data group, and the negative frequency domain is input with the second data group. The IFFT-executed OFDM symbols correspond to the first and the second data groups.

Subsequently, a GI is inserted into the OFDM symbols and the OFDM symbols are converted to an analog signal.

The buffer 381 temporarily stores the OFDM symbols to extend the OFDM symbols into the time domain. Hence, the same OFDM symbols are sequentially transmitted in the time domain at least two times. The frequency generator 391 generates frequencies corresponding to the three frequency bands f₁, f₂, f₃ in accordance with the predetermined transmission channel pattern.

The final analog-converted OFDM symbols are sequentially up-converted two times to a certain frequency band. For example, if the transmission channel is {f₁, f₂, f₃ f₁, f₂, f₃}, the final analog-converted OFDM symbols are transmitted once in the frequency domain f₁ at the time T₀, temporarily stored in the buffer 380, and transmitted once again in the frequency domain f₂ at the next time T₁.

The above descriptions are made with respect to the 110 Mbps and 200 Mbps modes. As for a 55 Mbps mode, the OFDM modulator 350 or 351 utilizes a different data input scheme. Specifically, a half (1/2) of the positive frequency domain is input with actual first data, and the remaining half (1/2) of the positive frequency domain is input with the same data which is the copy of the actual first data. Similarly, a half (1/2) of the negative frequency domain is input with actual second data, and the remaining half (1/2) of the negative frequency domain is input with the copy of the actual second data. These loaded data are IFFT-executed and output as the OFDM symbols having double the data amount as compared with the conventional OFDM symbols of the 55 Mbps. Next, the OFDM symbols are data-processed and transmitted in the time domain two times as mentioned above. Consequently, the same data transmission rate is obtained as in the 55 Mbps mode. As for a 480 Mbps mode, the conventional transmission scheme is applied

FIG. 4 is a conceptual diagram illustrating the transmission scheme extended into the time domain of the TFI-OFDM transmission system according to an aspect of the present invention, which is described in greater detail below. By way of example, piconet A as described below has the transmission channel pattern {f₃, f₁, f₂, f₃, f₁, f₂} with respect to the three frequency bands {f₁, f₂, f₃}.

As shown in FIG. 4, OFDM symbols loaded in each frequency band contain different data in the positive and negative frequency domains, respectively, and are transmitted two times along the time axis. Specifically, the OFDM symbols A1 and A12, which are initially transmitted in the frequency band f₃ at the time T₀, are transmitted once again in the frequency band f₁ at the time T₁. In the same manner, a plurality of the OFDM symbols are transmitted two times in the frequency bands according to the transmission channel pattern. The transmission scheme has the same data transmission rate as the conventional transmission scheme of FIG. 2 with respect to the OFDM symbols transmitted at the times T₀ to T₅.

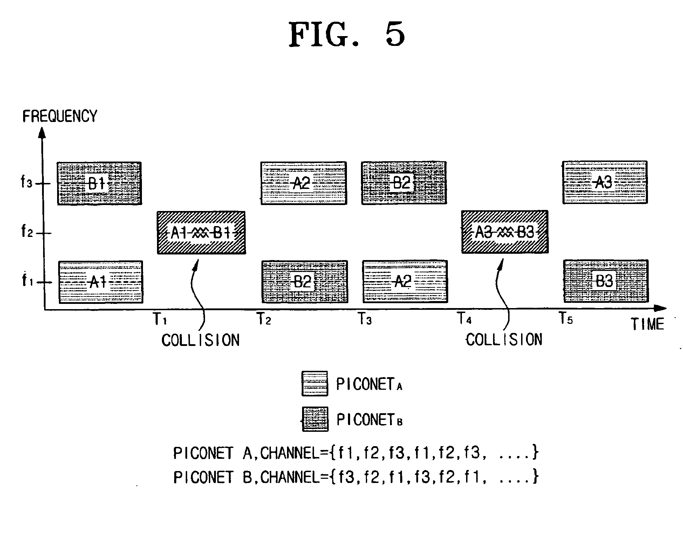

FIG. 5 is a conceptual diagram illustrating inter-symbol collisions in a multi-piconet environment according to an embodiment of the present invention, in which performances of adjacent simultaneously operating piconets (SOPs) are enhanced while the same data transmission rate is maintained as in the conventional transmission scheme of FIG. 2.

Referring now to FIG. 5, the transmission channel pattern of piconet A is {f₁, f₂, f₃, f₁, f₂, f₃} and that of piconet B is {f₃, f₂, f₁, f₃, f₂, f₁} with respect to the three frequency bands f₁, f₂, f₃. The OFDM symbol A1 of piconet A, which is transmitted in the frequency band f₂ at the time T₁, collides with the OFDM symbol B1 of piconet B. The OFDM symbol A3 of piconet A, which is transmitted in the frequency band f₂ at the time T₄, collides with the OFDM symbol B3 of piconet B. Accordingly, the inter-symbol collisions are inevitable due to the adjacent SOPs in the multi-piconets.

The transmission scheme extended to the time domain according to an embodiment of the present invention, transmits the same OFDM symbol two times along the time axis so that the collided OFDM symbols A1, B1, A3, and B3 are re-transmitted in other frequency bands at the previous time interval or at the next time interval. As a result, even if an OFDM symbol has collided and is lost, other OFDM symbols are losslessly transmitted since the same OFDM symbols are transmitted two times so that the adjacent SOP performance is definitely enhanced.

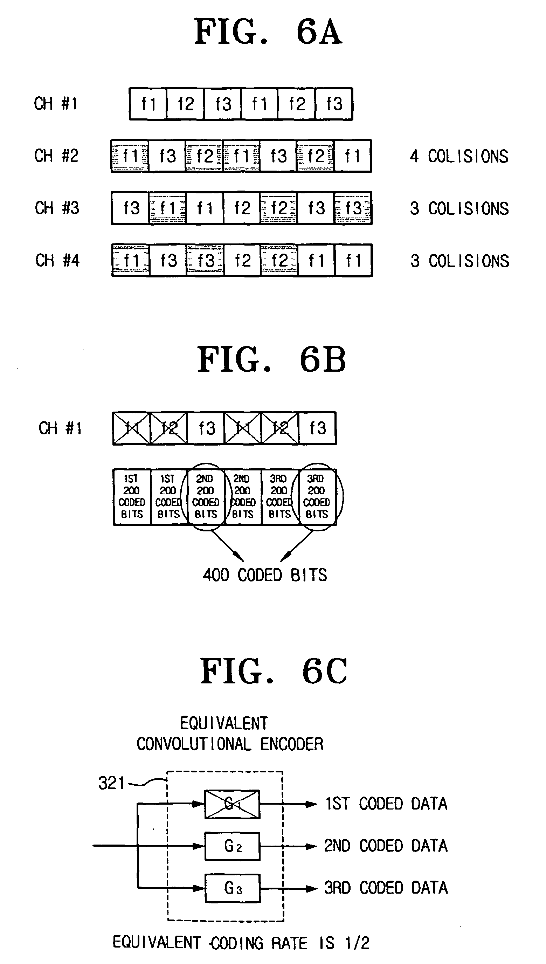

FIG. 6A to 6C are diagrams illustrating the transmission scheme according to aspects of the present invention.

FIG. 6A illustrates a case when each transmission channel CH#2, CH#3, and CH#4 is delayed for 0.5 OFDM symbol with respect to the transmission channel CH#1, which results in collisions between adjacent transmission channels. The transmission channel CH#2 has four symbol collisions with respect to the transmission channel CH#1, and the transmission channels CH#3 and CH#4 each have three symbol collisions with respect to the transmission channel CH#1. Thus, the transmission channel CH#1 experiences the worst channel conditions in the vicinity of the transmission channel CH#2. Referring to FIG. 6B, only 400 bits of data are losslessly transmitted with respect to the transmitted 600-bit data.

If the transmission system of FIG. 3B data-processes the OFDM symbols being transmitted in the transmission channel CH#1, the first OFDM symbols transmitted in the frequency bands f₁ and f₂ correspond to the first data group output from the first generator G1 of the convolutional encoder 321, second OFDM symbols transmitted in the frequency bands f₃ and f₁ correspond to the second data group output from the second generator G2, and third OFDM symbols transmitted in the frequency bands f₂ and f₃ correspond to the third data group output from the third generator G3. Thus, even in the worst channel conditions, only the first OFDM symbols are lost while the second and third OFDM symbols are losslessly transmitted.

Consequently, effects are equivalent to the 1/2 convolutional encoding so that a 1/2 rate of error correction capability is maintained through a 1/2 rate convolutional decoding at a reception side.

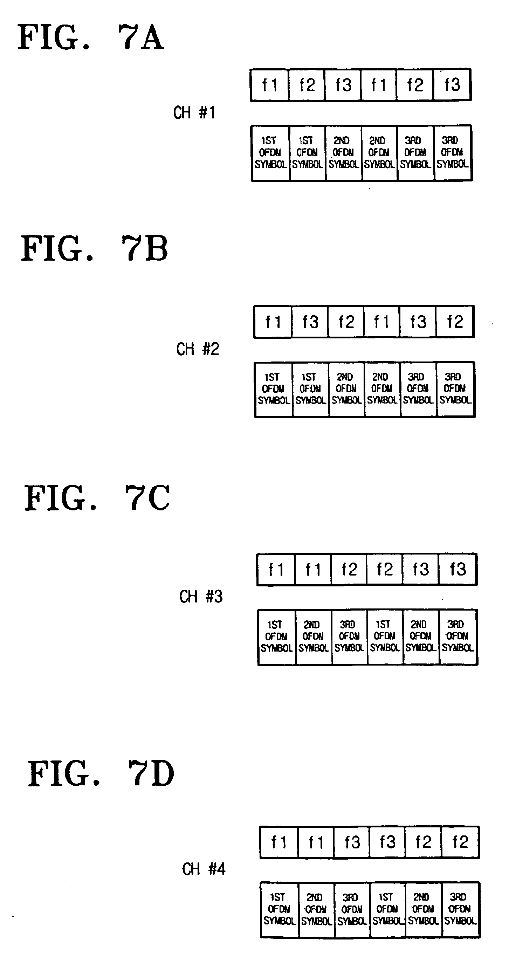

FIGS. 7A to 7D are diagrams illustrating examples of the time-domain-extended transmission scheme applied to each of the transmission channel patterns according to aspects of the present invention. By way of example, four kinds of the transmission channel pattern are utilized with respect to the three frequency bands f₁, f₂, f₃.

In the transmission channel CH#1={f₁, f₂, f₃, f₁, f₂, f₃, ...} of FIG. 7A, the frequency bands f₁ and f₂ transmit the first OFDM symbols, the frequency bands f₃ and f₁ transmit the second OFDM symbols, and the frequency bands f₂ and f₃ transmit the third OFDM symbols in sequence.

In the transmission channel CH#2={f₁, f₃, f₂, f₁, f₃, f₂, ...} of FIG. 7B, the frequency bands f₁ and f₃ transmit the first OFDM symbols, the frequency bands f₂ and f₁ transmit the second OFDM symbols, and the frequency bands f₃ and f₂ transmit the third OFDM symbols in sequence.

In the transmission channel CH#3={f₁, f₁, f_{2,} f₂, f₃, f₃, ...} of FIG. 7C, the frequency bands f₁, f₁, and f₂ respectively transmit the first, second, and third OFDM symbols, and the frequency bands f₂, f₃, and f₃ respectively transmit the first, second, and third OFDM symbols once again.

In the transmission channel CH#4={f₁, f₁, f₃, f₃, f₂, f₂, ...} of FIG. 7D, the frequency bands f₁, f₁, and f₃ respectively transmit the first, second, and third OFDM symbols, and the frequency bands f₃, f₂, and f₂ respectively transmit the first, second, and third OFDM symbols once again.

In the light of the foregoing, the TFI-OFDM transmission system according to an embodiment of the present invention transmits the different data loaded in the positive and negative frequency domains, respectively, and transmits the OFDM symbols extended into the time domain. As a result, the data transmission rate becomes the same as the conventional TFI-OFDM transmission scheme and the effects of the collision due to interfering signals from the adjacent SOP is mitigated.

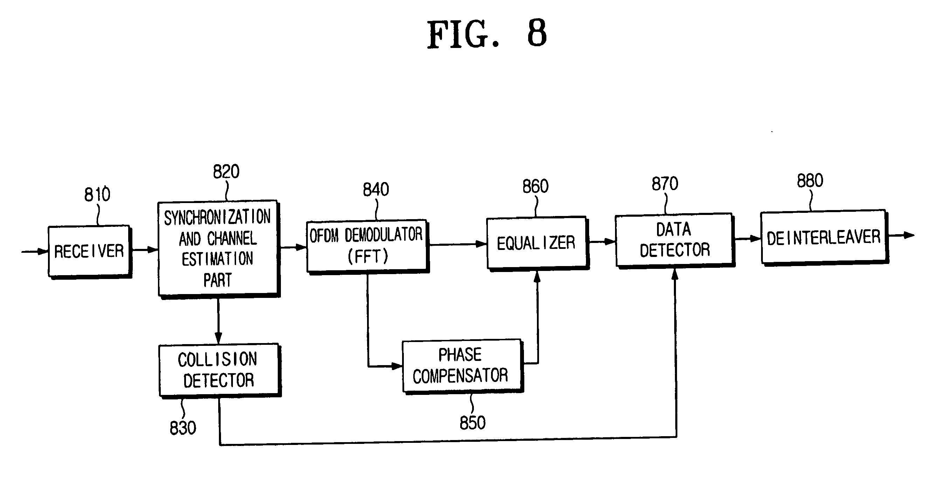

FIG. 8 is a schematic block diagram illustrating a TFI-OFDM reception system according to an aspect of the present invention. Referring to FIG. 8, the reception system includes a receiver 810, a synchronization and channel estimation part 820, a collision detector 830, an OFDM demodulator 840, a phase compensator 850, an equalizer 860, a data detector 870, and a deinterleaver 880.

The receiver 810 down-converts a certain number of frequency bands into predetermined transmission channel patterns.

The synchronization and channel estimation part 820 detects a sync signal through cross-correlation between preambles by scanning a specific frequency band of the certain number of the frequency bands. A channel is estimated by using two reference OFDM symbols per one frequency band. For example, for the transmission channel pattern {f₁, f₂, f₃, f₁, f₂, f₃, ...}, OFDM symbols transmitted in the underlined identical frequency band f₁ are present at three OFDM-symbol intervals on the time axis. Thus, a phase difference results from a phase offset, timing offset, and frequency offset between two OFDM symbols transmitted in a single frequency band. Accordingly, channels are estimated using the phase difference of two OFDM symbols.

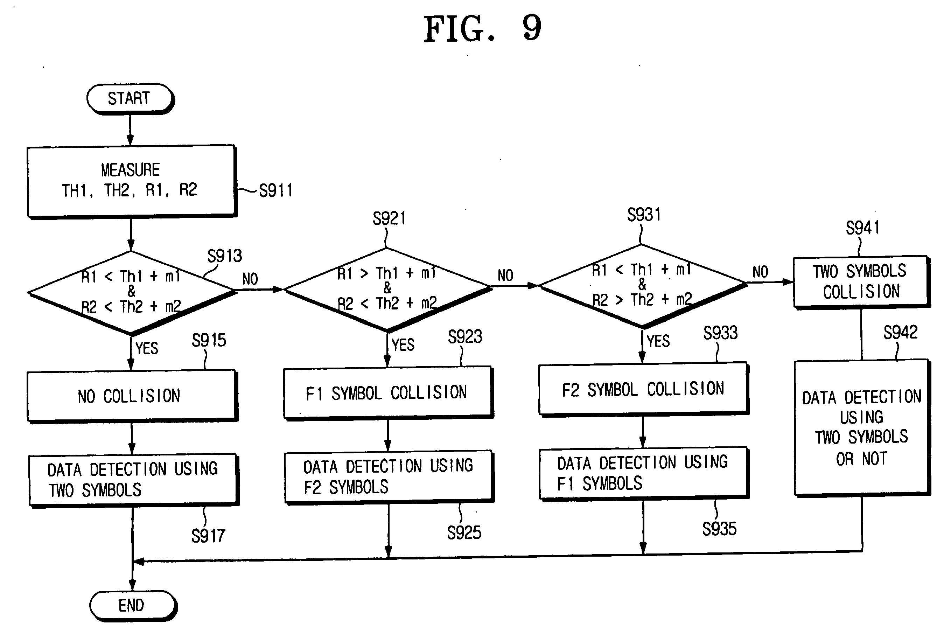

The collision detector 830 determines collisions of OFDM symbols that are transmitted in the multi-path channel conditions. The algorithm for the collision determination can vary. According to an embodiment of the present invention, the collisions are detected by measuring the powers of the received symbols. The steps for the collision determination will follow with reference to FIG. 9.

The OFDM demodulator 840 outputs data of the frequency domain from the OFDM symbols of the time domain that are input with the same specification as in the transmitting end by using the fast Fourier transform (FFT).

The phase compensator 850 compensates the phase of the received signal by utilizing a combination of a reference-based method and a decision-directed method.

The equalizer 860 removes multi-paths of the received signal by generally using a ONE-TAP equalizer according to the OFDM transmission characteristics.

The data detector 870 detects only data to be received and processed based on the determination of the collision detector 830. Preferably, but not necessarily, the data detector 870 detects data which correspond to non-collided OFDM symbols of the same OFDM symbols received twice.

The deinterleaver 880 deinterleaves the detected data of the data detector 870 in the reverse order of interleaving at the transmitting end.

FIG. 9 is a flowchart illustrating exemplary steps for selectively detecting non-collided OFDM symbols in the multi-piconet environment by the collision detector 830 of the TFI-OFDM reception system according to an aspect of the present invention. In the following example, the collision is detected with respect to the OFDM symbols transmitted in the transmission channel {f₁, f₂, f_{3,} f₁, f₂, f₃}.

The first OFDM symbols transmitted in the frequency bands f₁ and f₂ are received in sequence.

The collision detector 830 measures a power R1 of the first OFDM symbols (hereafter refer to as a 'first power') transmitted in the current frequency band f₁ and a power R2 of the first OFDM symbols (hereinafter refer to as a 'second power') transmitted in the next frequency band f₂. Next, an average power TH1 is calculated with respect to the OFDM symbols previously transmitted in the frequency band f₁ (hereinafter referred to as a 'first average power'), and an average power TH2 is calculated with respect to the OFDM symbols previously transmitted in the frequency band f₂ (hereinafter refer to as a 'second average power) at step S911.

The first power R1 is compared with the first average power TH1, and the second power R2 is compared with the second average power TH2 at step S913. If the first power R1 is less than the sum of the first average power TH1 and a margin m1 and the second power R2 is less than the sum of the second average power TH2 and a margin m2, then there are no collisions in the first OFDM symbols transmitted in the frequency band f₁ and the first OFDM symbols transmitted in the frequency band f₂ (step S915). Hence, the data detector 870 detects the data using both of the first OFDM symbols transmitted in the frequency bands f₁ and f₂ at step S917.

If the first power R1 is greater than the sum of the first average power TH1 and the margin m1 and the second power R2 is less than the sum of the second average power TH2 and the margin m2 at step S921, then the first OFDM symbols transmitted in the frequency band f₁ have collisions (step S923). Accordingly, the data detector 870 detects data by use of the first OFDM symbols transmitted in the frequency band f₂ at step S925.

If the first power R1 is less than the sum of the first average power TH1 and the margin m1 and the second power R2 is greater than the sum of the second average power TH2 and the margin m2 at step S931, then the first OFDM symbols transmitted in the frequency band f₂ have collisions (step S933). Accordingly, the data detector 870 detects data by use of the first OFDM symbols transmitted in the frequency band f₁ at step S935.

If the first power R1 is greater than the sum of the first average power TH1 and the margin m1 and the second power R2 is greater than the sum of the second average power TH2 and the margin m2 at step S931, then there are collisions in both of the first OFDM symbols transmitted in the frequency band f₁ and the first OFDM symbols transmitted in the frequency band f₂ (step S941). Accordingly, the data detector 870 detects data using both of the first OFDM symbols transmitted in the frequency bands f₁ and f₂. Alternatively, the data detector 870 may not use both of the first OFDM symbols (step S942).

Referring back to FIG. 3A, if the convolutional encoder 320 performs both of the symbol interleaving and the tone interleaving, the interleaver 330 detects data using two collided OFDM symbols. Referring back to FIG. 3B, if the convolutional encoder 321 performs the tone interleaving alone, the interleaver 331 can correct errors through the convolutional decoding of a 1/2 rate as shown in FIGS. 6B and 6C without having to use the two collided OFDM symbols.

As described, the collision detection is executed with respect to the same OFDM symbols received in sequence.

In the light of the foregoing, the reception performance is enhanced by selectively using the non-collided OFDM symbols in the multi-piconet environment for the data reception.

The TFI-OFDM transmission system according to an aspect of the present invention OFDM-modulates the different data in the positive and negative frequency domains and transmits the modulated OFDM symbols in the time domain at least two times, to thus mitigate the collisions resulting from the adjacent SOPs in the multi-piconet environment.

The TFI-OFDM reception system according to an aspect of the present invention selectively utilizes the non-collided OFDM symbols for data reception in the multi-piconet environment.

## Claims

1. A method of Time Frequency Interleaved Orthogonal Frequency Division Multiplexing (TFI-OFDM) transmission, comprising:
a) generating data having a rate corresponding to a predetermined transmission speed mode;
b) generating a plurality of data groups by convolutional-encoding the generated data using a plurality of generator polynomials, wherein each of the plurality of data groups represents the output of one of the generator polynomials;
c) performing bit-interleaving with respect to each of the plurality of data groups;
d) OFDM modulating by inputting a first interleaved data group into a positive frequency domain and a second interleaved data group into a negative frequency domain, executing an inverse fast Fourier transform (IFFT) and outputting OFDM symbols; and
e) sequentially transmitting the OFDM symbols in a time domain at least two times.

2. The method of claim 1, wherein the step c) comprises tone-interleaving the plurality of data groups.

3. The method of claim 1, wherein the step b) comprises generating a first data group, a second data group, and a third data group, by convolutional-encoding the data at a coding rate of 1/3,
the step c) comprises interleaving the first, the second and the third data groups, respectively,
the step d) comprises QPSK modulating the first, the second, and the third interleaved data groups, respectively, and generating a first OFDM symbol, a second OFDM symbol, and a third OFDM symbol, by IFFT-ing the first, the second and the third QPSK modulated data groups, and
the step e) comprises sequentially transmitting the first OFDM symbol in a time domain at least two times, the second OFDM symbol in a time domain at least two times, and the third OFDM symbol in a time domain at least two times.

4. The method of claim 3, wherein the data is 200 bit-long, and each of the first, the second and the third data groups is 200-bit long.

5. A Time Frequency Interleaved Orthogonal Frequency Division Multiplexing (TFI-OFDM) transmission system, comprising:
a) a data generator (321) for generating data having a rate corresponding to a predetermined transmission speed mode and for generating a plurality of data groups by convolutional-encoding the generated data using a plurality of generator polynomials, wherein each of the plurality of data groups represents the output of one of the generator polynomials;
b) an interleaver (331) for performing bit-interleaving with respect to each of the plurality of data groups;
c) an OFDM modulator (351) for inputting a first interleaved data group into a positive frequency domain and a second interleaved data group into a negative frequency domain, executing an inverse fast Fourier transform **(IFFT)** and outputting OFDM symbols; and
e) a transmitter for sequentially transmitting the OFDM symbols in a time domain at least two times.

6. The system according to claim 5, wherein the interleaving means is adapted to tone-interleave the plurality of data groups.

7. The system according to claim 5, wherein the data generator (321) is adapted to generate a first data group, a second data group, and a third data group, by convolutional-encoding the data at a coding rate of 1/3,
the interleaver (331) is adapted to interleave the first, the second and the third data groups, respectively,
the OFDM modulator (351) is adapted to QPSK modulate the first, the second, and the third interleaved data groups, respectively, and to generate a first OFDM symbol, a second OFDM symbol, and a third OFDM symbol, by IFFT-ing the first, the second and the third QPSK modulated data groups, and
the transmitter is adapted to sequentially transmit the first OFDM symbol in a time domain at least two times, the second OFDM symbol in a time domain at least two times, and the third OFDM symbol in a time domain at least two times.

8. The system of claim 7, wherein the data is 200 bit-long, and each of the first, the second and the third data groups is 200-bit long.

## Patentansprüche

1. Verfahren zum Senden in einem zeit- und frequenzverschachtelten orthogonalen Frequenzmultiplexverfahren (TFI-OFDM), umfassend:
a) Erzeugen von Daten, die eine Rate entsprechend eines vorbestimmten Sendegeschwindigkeitsmodus haben;
b) Erzeugen einer Vielzahl von Datengruppen durch Faltungscodierung der erzeugten Daten mit Hilfe einer Vielzahl von Generatorpolynomen, wobei jede aus der Vielzahl von Datengruppen für die Ausgabe eines der Generatorpolynome steht;
c) Ausführen einer Bitverschachtelung in Bezug auf jede aus der Vielzahl von Datengruppen;
d) OFDM-Modulieren durch Eingeben einer ersten verschachtelten Datengruppe in eine positive Frequenzdomäne und einer zweiten verschachtelten Datengruppe in eine negative Frequenzdomäne, Ausführen einer inversen schnellen Fouriertransformation (IFFT) und Ausgeben von OFDM-Symbolen sowie
e) wenigstens zweimaliges sequentielles Senden der OFDM-Symbole in einer Zeitdomäne.

2. Verfahren nach Anspruch 1, bei dem der Schritt c) die Tonverschachtelung der Vielzahl von Datengruppen umfasst.

3. Verfahren nach Anspruch 1, bei dem der Schritt b) das Erzeugen einer ersten Datengruppe, einer zweiten Datengruppe und einer dritten Datengruppe durch Faltungscodierung der Daten mit einer Codierrate von 1/3 umfasst,
der Schritt c) das Verschachteln der ersten, der zweiten bzw. der dritten Datengruppe umfasst,
der Schritt d) das QPSK-Modulieren der ersten, zweiten bzw. dritten verschachtelten Datengruppe und das Erzeugen eines ersten OFDM-Symbols, eines zweiten OFDM-Symbols und eines dritten OFDM-Symbols durch Ausführen einer inversen schnellen Fouriertransformation an der ersten, zweiten und dritten QPSK-modulierten Datengruppe umfasst und
der Schritt e) das sequentielle Senden des ersten OFDM-Symbols in einer Zeitdomäne wenigstens zweimal, des zweiten OFDM-Symbols in einer Zeitdomäne wenigstens zweimal und des dritten OFDM-Symbols in einer Zeitdomäne wenigsten zweimal umfasst.

4. Verfahren nach Anspruch 3, bei dem die Daten 200 Bit lang sind und jeweils die erste, die zweite und die dritte Datengruppe 200 Bit lang ist.

5. System zum Senden in einem zeit- und frequenzverschachtelten orthogonalen Frequenzmultiplexverfahren (TFI-OFDM), enthaltend:
a) einen Datengenerator (321) zum Erzeugen von Daten, die eine Rate entsprechend eines vorbestimmten Sendegeschwindigkeitsmodus haben und zum Erzeugen einer Vielzahl von Datengruppen durch Faltungscodierung der erzeugten Daten mit Hilfe einer Vielzahl von Generatorpolynomen, wobei jede aus der Vielzahl von Datengruppen für die Ausgabe eines der Generatorpolynome steht;
b) eine Verschachtelungseinrichtung (331) zum Ausführen einer Bitverschachtelung in Bezug auf jede aus der Vielzahl von Datengruppen;
c) einen OFDM-Modulator (351) zum Eingeben einer ersten verschachtelten Datengruppe in eine positive Frequenzdomäne und einer zweiten verschachtelten Datengruppe in eine negative Frequenzdomäne, Ausführen einer inversen schnellen Fouriertransformation (IFFT) und Ausgeben von OFDM-Symbolen sowie
d) einen Sender zum wenigstens zweimaligen sequentiellen Senden der OFDM-Symbole in einer Zeitdomäne.

6. System nach Anspruch 5, bei dem die Verschachtelungseinrichtung dazu eingerichtet ist, eine Tonverschachtelung der Vielzahl von Datengruppen auszuführen.

7. System nach Anspruch 5, bei dem der Datengenerator (321) dazu eingerichtet ist, eine erste Datengruppe, eine zweite Datengruppe und eine dritte Datengruppe durch Faltungscodierung der Daten bei einer Codierrate von 1/3 zu erzeugen,
die Verschachtelungseinrichtung (331) dazu eingerichtet ist, die erste, zweite bzw. dritte Datengruppe zu verschachteln,
der OFDM-Modulator (351) dazu eingerichtet ist, eine QPSK-Modulation an der ersten, der zweiten bzw. der dritten verschachtelten Datengruppe auszuführen und ein erstes OFDM-Symbol, ein zweites OFDM-Symbol und ein drittes OFDM-Symbol durch eine inverse schnelle Fouriertransformation der ersten, der zweiten und der dritten QPSK-modulierten Datengruppe zu erzeugen, und
der Sender dazu eingerichtet ist, nacheinander das erste OFDM-Symbol in einer Zeitdomäne wenigstens zweimal zu senden, das zweite OFDM-Symbol in einer Zeitdomäne wenigstens zweimal zu senden und das dritte OFDM-Symbol in einer Zeitdomäne wenigstens zweimal zu senden.

8. System nach Anspruch 7, bei dem die Daten 200 Bit lang sind und jeweils die erste, die zweite und die dritte Datengruppe 200 Bit lang ist.

## Revendications

1. Procédé de transmission par multiplexage par répartition orthogonale de la fréquence à entrelacement temps fréquence (TFI-OFDM), comprenant :
a) la génération de données possédant un débit correspondant à un mode prédéfini de vitesse de transmission,
b) la génération d'une pluralité de groupes de données par codage par convolution, les données générées utilisant une pluralité de polynômes générateurs, dans lequel chacun de la pluralité des groupes de données représente la sortie de l'un des polynômes générateurs,
c) l'exécution d'un entrelacement binaire par rapport à chacun de la pluralité de groupes de données,
d) la modulation par multiplexage OFDM en appliquant en entrée un premier groupe de données entrelacées dans un domaine de fréquences positives et un deuxième groupe de données entrelacées dans un domaine de fréquences négatives, en exécutant une transformation inverse rapide de Fourier (IFFT) et en fournissant en sortie des symboles par multiplexage OFDM, et
e) la transmission séquentielle, et au moins deux fois, des symboles par multiplexage OFDM dans le domaine du temps.

2. Procédé selon la revendication 1, dans lequel l'étape c) comprend l'entrelacement de tonalités de la pluralité de groupes de données.

3. Procédé selon la revendication 1, dans lequel l'étape b) comprend la génération d'un premier groupe de données, d'un deuxième groupe de données et d'un troisième groupe de données par codage par convolution des données à un débit de codage de 1 / 3,
l'étape c) comprend l'entrelacement respectif du premier, du deuxième et du troisième groupe de données,
l'étape d) comprend une modulation en quadrature par déplacement de phase (QPSK) modulant le premier, le deuxième et le troisième groupe de données entrelacées, respectivement, et la génération d'un premier symbole par multiplexage OFDM, d'un deuxième symbole par multiplexage OFDM et d'un troisième symbole par multiplexage OFDM par transformation IFFT du premier, du deuxième et du troisième groupe de données modulées par le procédé de modulation QPSK, et
l'étape e) comprend la transmission séquentielle, au moins deux fois, du premier symbole par multiplexage OFDM, au moins deux fois, du deuxième symbole par multiplexage OFDM et au moins deux fois du troisième symbole par multiplexage OFDM.

4. Procédé selon la revendication 3, dans lequel les données sont longues de 200 bits et chacun du premier, du deuxième et du troisième groupe de données est long de 200 bits.

5. Système de transmission par multiplexage par répartition orthogonale de la fréquence à entrelacement temps fréquence (TFI-OFDM), comprenant :
a) un générateur de données (321) destiné à générer des données présentant un débit correspondant à un mode de vitesse de transmission prédéfini et destiné à générer une pluralité de groupes de données par codage par convolution, les données générées utilisant une pluralité de polynômes générateurs, dans lequel chacun de la pluralité de groupes de données représente la sortie de l'un des polynômes générateurs,
b) un dispositif d'entrelacement (331) destiné à effectuer un entrelacement binaire par rapport à chacun de la pluralité de groupes de données,
c) un modulateur par multiplexage OFDM (351) destiné à recevoir en entrée un premier groupe de données entrelacées dans un domaine de fréquences positives et un deuxième groupe de données entrelacées dans un domaine de fréquences négatives, en exécutant une transformation inverse rapide de Fourier (IFFT) et en fournissant en sortie des symboles par multiplexage OFDM, et
d) un émetteur destiné à émettre séquentiellement, et au moins deux fois, les symboles par multiplexage OFDM dans le domaine du temps.

6. Système selon la revendication 5, dans lequel le moyen d'entrelacement est conçu pour entrelacer par tonalité la pluralité de groupes de données.

7. Système selon la revendication 5, dans lequel le générateur de données (321) est conçu pour générer un premier groupe de données, un deuxième groupe de données et un troisième groupe de données grâce à un codage par convolution des données à un taux de codage de 1 / 3,
le dispositif d'entrelacement (331) est conçu pour entrelacer respectivement le premier, le deuxième et le troisième groupe de données,
le modulateur par multiplexage OFDM (351) est conçu pour moduler par le procédé QPSK respectivement le premier, le deuxième et le troisième groupe de données entrelacées et pour générer un premier symbole par multiplexage OFDM, un deuxième symbole par multiplexage OFDM et un troisième symbole par multiplexage OFDM par une transformation IFFT du premier, du deuxième et du troisième groupe de données modulées par le procédé QPSK, et
l'émetteur est conçu pour émettre séquentiellement le premier symbole par multiplexage OFDM dans le domaine du temps au moins deux fois, le deuxième symbole par multiplexage OFDM dans le domaine du temps au moins deux fois et le troisième symbole par multiplexage OFDM dans le domaine du temps au moins deux fois.

8. Système selon la revendication 7, dans lequel les données sont longues de 200 bits et chacun du premier, du deuxième et du troisième groupe de données est long de 200 bits.
